# EUROPEAN PATENT SPECIFICATION

(11) **EP 4 415 112 B1**
(45) Date of publication and mention of the grant of the patent: **04.03.2026**
(21) Application number: 22890297.9
(22) Date of filing: 28.10.2022
(51) Int. Cl.: H01M 10/658, H01M 10/613, H01M 50/211, H01M 50/233, H01M 50/383

(54) **BATTERY MODULE**
BATTERIEMODUL
MODULE DE BATTERIE

(30) Priority: 04.11.2021 KR 20210150268
(43) Date of publication of application: 14.08.2024
(73) Proprietor: LG Energy Solution, Ltd., Seoul, 07335 (KR)
(72) Inventor: WON, Seongyeon, Daejeon 34122 (KR); LEE, Taekyeong, Daejeon 34122 (KR); LEE, Hyoungsuk, Daejeon 34122 (KR)
(74) Representative: Plasseraud IP
(86) International application number: PCT/KR2022/016734
(87) International publication number: WO 2023/080566

(56) References cited:
- JP-A- 2013 246 920
- JP-A- 2013 251 127
- JP-A- 2021 507 483
- KR-A- 20200 107 213
- KR-A- 20210 011 642
- KR-A- 20210 042 480
- KR-A- 20210 042 480
- KR-B1- 102 280 326

## Description

### [Technical Field]

This application is claims priority to Patent Application No. 10-2021-0150268 filed in the Republic of Korea on November 4, 2021.

The present disclosure relates to a battery module, more particularly, to a battery module including a first heat insulator of a heat insulation pad type disposed between individual battery cells and a second heat insulator made of a thermally expandable material and placed between individual electrode leads, to effectively reduce the risk of fire and explosion by blocking heat and high-temperature particles from moving between the individual battery cells and a bus bar plate.

### [Background Art]

With heightened interest in the environment, efforts to reduce carbon emissions are spreading worldwide. To reduce carbon emissions, production of conventional vehicles provided with combustion engines powered by burning fossil fuels is continuously decreasing, while production of electric vehicles powered by electricity is continuously increasing.

There is increasing demand for secondary batteries, which are mounted in electric vehicles and configured to store electricity. In a situation where the use of personal mobile devices such as smart phones and tablet PCs has become commonplace, there is also continuously increasing demand for such secondary batteries to supply electricity to mobile devices.

Due to such an increase in demand for secondary batteries, research and development on secondary batteries are being actively conducted.

At this time, in order to improve the capacity and efficiency of the secondary battery, there is an increasing demand for a battery pack having a multi-module structure in which a plurality of secondary batteries are connected in series and parallel.

When a battery pack is formed by connecting the plurality of battery cells in series and parallel, a method of adding other components to at least battery module configured of at least one battery cell is generally applied.

A battery module formed of a U-frame structure capable of improving the quality of components and increasing space utilization has been developed for providing a frame for protecting the inside of the single battery module.

The battery module having the U-frame structure may include a battery-cell-layered body in which a plurality of battery cells are disposed, an U-structured lower frame forming a bottom surface and both lateral surfaces covering an lower surface and both lateral surfaces of the battery-cell-layered body, and an upper frame covering an upper surface of the battery-cell-layered body.

Meanwhile, the battery cell layered body inevitably generates heat when power is supplied. If heat generation is not effectively controlled, the efficiency of the battery cell layered body might suddenly be deteriorated. In some cases, there could be a risk of fire and explosion.

Such fire and explosion generally occur from, as heat and high-temperature particles are diffused from one of the battery cells and to other battery cells adjacent to the one.

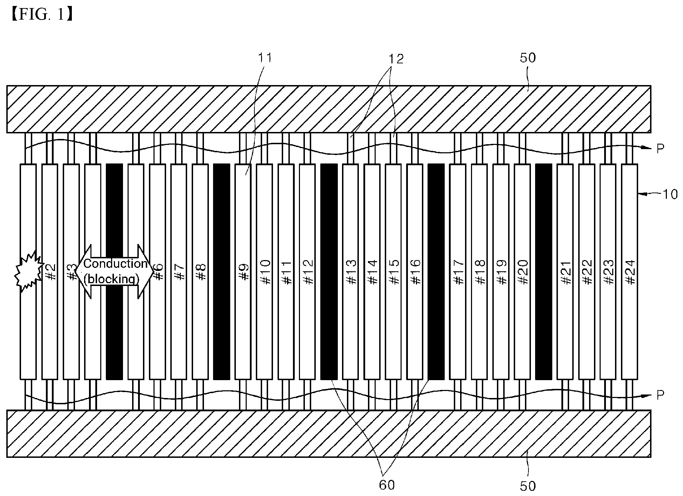

To prevent the fire and explosion, KR10-2020-0106378A1 discloses a battery module that may prevent heat or particles from moving to adjacent cells 11 by providing a heat insulation pad 60 in a gap formed between adjacent batter cells 11, as shown in FIG. 1.

As shown in the drawing, if a first battery cell 11 disposed in the leftmost position is overheated, the heat and high-temperature particles generated in the first battery cell 11 may be prevented from moving to the other battery cell 11 disposed on the right of a fourth battery cell 11 by the heat insulation pad 60 disposed between the fourth battery cell 11 and a fifth battery cell 11.

However, according to the configuration of KR10-2020-0106378A1, an open space is formed between the bus bar plate 50 and a front end or a rear end of the individual battery cells 11, which is not blocked from the first battery cell 11 to a twenty-fourth battery cell 11.

Accordingly, the heat and high-temperature particles generated in the first battery cell 11 could be diffused through the open space as a whole, so that the conventional battery cell cannot but have a limitation that the fire and explosion prevention effect using the heat insulation pad 60 can only be halved.

Document JP 2013/251127 discloses a power supply device which includes multiple battery modules disposed adjacent to each other, each battery module including multiple chargeable batteries and a fire resistant heat insulation case which houses the batteries and has a lamination structure of metal plates and heat insulation plates formed by laminating the heat insulation plates on inner surfaces or outer surfaces of the metal plates of the related art.

### [Description of Disclosure]

### [Technical Problems]

Accordingly, one object of the present disclosure is invented to solve the above-noted disadvantages of the prior art, and to provide a battery module that may include a first heat insulator formed in a heat insulation pad disposed between individual battery cells, and a second heat insulator formed of a heat expansion material disposed between individual electrode leads, so that a risk of fires and explosion may be effectively reduced by blocking heat and high-temperature particles from moving between individual battery cells and a bus bar plate.

A further object of the present disclosure is to provide a battery module formed to have a volume smaller than a space formed between individual battery cells and a bus bar plate so that a space formed between the individual battery cells and the bus bar plate can serve as an air passage, thereby effectively maintaining cooling performance when operating in a range of normal temperatures.

Objects of the present invention are not limited to the above-described objects, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [Technical Solutions]

A battery module according to an embodiment of the present disclosure is defined in the appended claims..

### [Advantageous Effects]

The battery module according to the invention is claimed in independent claim 1.

In addition, the battery module may be formed to have a volume smaller than a space formed between individual battery cells and a bus bar plate. Accordingly, a space formed between the individual battery cells and the bus bar plate can serve as an air passage, thereby effectively maintaining cooling performance when operating in a range of normal temperatures.

In addition to the above-described effects, specific effects of the present invention will be described together with the following detailed description for implementing the present invention.

### [Brief Description of Drawings]

FIG. 1 is a schematically sectional view of a battery cell according to prior art;
FIG. 2 is an exploded perspective view of a battery module according to an embodiment of the present disclosure;
FIG. 3 is a schematic sectional view of the battery module shown in FIG. 2;
FIG. 4 is a rear perspective view showing a state where a second heat insulator is disposed on a first bus bar plate shown in FIG. 2;
FIG. 5 is a partially enlarged view of FIG. 3, showing a state where a second heat insulator is not expanded; and
FIGS. 6 and 7 are partially enlarged views of FIG. 3, showing a process of expanding a second heat insulator when a critical temperature is reached.

### [Description of Reference numerals]

1: Battery module 100: Battery cell layered body 110: Battery cell 111: Electrode lead 200: Frame 210: Lower frame 211: Bottom frame 212: Side frame 220: Upper frame 300: End plate 310: First end plate 320: Second end plate 400: Heat insulation cover 410: First heat insulation cover 420: Second heat insulation cover 500: Bus bar plate 600: First heat insulator 700: Second heat insulator

### [DESCRIPTION OF SPECIFIC EMBODIMENTS]

The above-described aspects, features and advantages are specifically described hereunder with reference to the accompanying drawings. Below, preferred embodiments according to the disclosure are specifically described with reference to the accompanying drawings. In the drawings, identical reference numerals can denote identical or similar components.

Although "first", "second", and the like may be used to describe various components, these components are not limited by these terms. These terms are only used to distinguish one component from another component, and unless otherwise stated, the first component may be the second component, of course.

Throughout the specification, unless otherwise stated, each component may be singular or plural.

Hereinafter, the arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

In addition, when a component is described as "linked", "coupled" or "connected" to another component, the components may be directly connected or connected to each other, but other components may be "interposed" between each component. ", or each component may be "linked", "coupled" or "connected" through other components.

Singular expressions used herein include plural expressions unless the context clearly dictates otherwise. In this application, terms such as "consisting of" or "comprising" should not be construed as necessarily including all of the various components or steps described in the specification. It should be construed that it may not include some of the components or some of the steps. Or may further include additional components or steps.

Further, singular expressions used herein include plural expressions unless the context clearly dictates otherwise. In this application, terms such as "consisting of" or "comprising" should not be construed as necessarily including all of the various components or steps described in the specification. It should be construed that it may not include some of the components or some of the steps. Or may further include additional components or steps.

Throughout the specification, when it states "A and/or B", it means A, B or A and B, unless otherwise specified, and when it says "C to D", it means C or more and D or less, unless otherwise specified.

Hereinafter, referring to the accompanying drawings, a battery module 1 according to an embodiment of the present disclosure will be described.

### [Overall structure of Battery module]

Hereinafter, referring to the accompanying drawings, an overall structure of a battery module 1 according to an embodiment of the present disclosure will be described in detail.

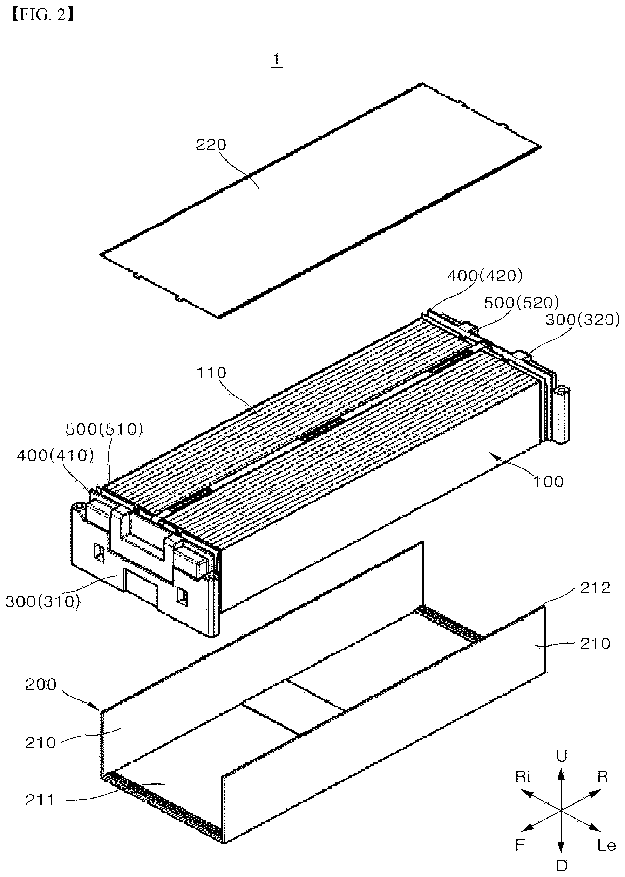

FIG. 2 is an exploded perspective view of a battery module 1 according to an embodiment of the present disclosure.

Referring to FIG. 2, the battery module 1 according to the embodiment may include a frame 200 configured of a lower frame 210 and an upper frame 220; a battery cell layered body 100 mounted inside the frame 200, a pair of end plates 300 coupled to an open front and an open rear of the frame 200, a heat insulation cover 400 disposed between the end plate 300 and the frame 200 to heat-insulate between the end plate 300 and the frame 200, and a bus bar plate 500 disposed between the heat insulation cover 400 and the battery cell layered body 100.

As shown in the drawing, a plurality of battery cells 110 may be layered in close contact, to form the battery cell layered body 100.

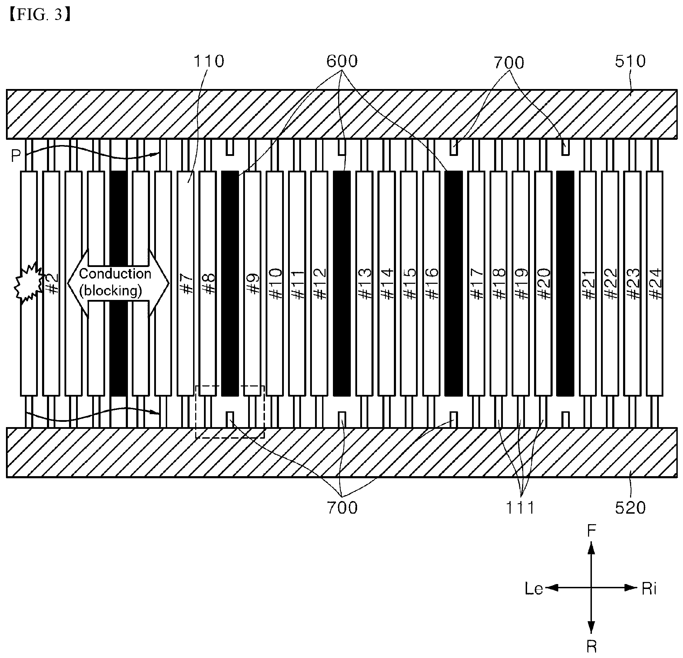

The first heat insulation unit 600 formed as a heat insulation pad may be disposed between adjacent battery cells 110, which will be described later. The first heat insulation units 600 may be disposed with one or several battery cells 110 interposed therebetween. In the embodiment shown in FIG. 3, the first heat insulation units 600 may be disposed with four battery cells 110 interposed therebetween.

To form a case or housing of the battery module 1, the frame 200 may include a lower frame 210 having a structure surrounding a lower surface and both lateral surfaces of the battery cell layered body 100 in order to accommodate the battery cell layered body 100, and an upper frame 220 disposed on a top surface of the battery cell layered body 100.

As shown in the drawing, the lower frame 210 may include a bottom frame 211 defining the bottom, and a pair of side frames 212 defining two lateral walls. As one example, the bottom frame 211 may integrally formed with the pair of side frames 212 as one by a press process of pressing a metal plate having a predetermined strength.

The upper frame 220 may be configured to cover the upper surface of the battery cell layered body 100, and may be made of a metal plate having a predetermined strength like the lower frame 210.

The upper frame 220 may be coupled to upper ends of the pair of side frames 212 to be assembled to the lower frame.

Back ends of both sides of the upper frame 220 and an upper end of the side frame 212 may be coupled to each other by laser welding (L).

The plurality of battery cells 110 may be pouch- type battery cells, and may be bidirectional battery cells in which positive and negative leads constituting the electrode lead 111 protrude in opposite directions.

The electrode leads 111 may be electrically connected by using the bus bar plate 500 to connect the plurality of battery cells 110 in series or parallel based on needed output and capacity of a battery module 1. Depending on specification of the applied product, the battery cell layered body 100 may further include a cartridge for accommodating the battery cell 110, a buffer member or a cooling means.

With respect to the drawing, front and rear of the frame 200 may be open. The electrode lead 111 of the battery cell layered body 100 may be exposed to the outside through the open front and rear.

A pair of insulation covers 400, a pair of end plates 300 and a pair of bus bar plates 500 may be disposed on the open front and rear of the frame to face the electrode lead 111.

The end plates 300 connected with the battery layered body 100 and the bus bar plate plates 500 may be disposed on the frame 200 together with the battery cell layered body 100. Or, the battery cell layered body 100 and the bus bar plates 500 may be disposed in the frame 200, and the end plates 300 may be coupled to the frame 200, in a state in which the upper frame 220 is coupled to the frame 200.

The end plate 300 may be fabricated by a casting method using a metal material, preferably, an iron or alloy material to maintain a predetermined strength.

The insulation cover 400 may be disposed between the end plate 300 and the bus bar plate 500, and may be configured to insulate heat by physically separate at least the end plate 300 and the bus bar plate 500. The insulation cover 400 may include a first insulation cover 420 disposed on the front side and a second insulation cover 420 disposed on the rear side.

Accordingly, the insulation cover 400 may be fabricated by injection-molding a plastic material capable of maintaining a predetermined strength and low electric conductivity.

### [Specific structure of First heat insulation unit and Second heat insulation unit]

Hereinafter, referring to FIG. 3, the specific structure of the first heat insulation unit 600 and the second heat insulation unit 700 provided in the battery module 1 according to an embodiment of the present disclosure will be described in detail.

As shown in FIG. 2, the battery module 1 according to the embodiment of the present disclosure may further include a first heat insulation unit 600 that is a heat insulation pad or sheet disposed between the battery cells 110.

The first heat insulation unit 600 may be configured to prevent heat, flame, or high-temperature particles generated in one battery cell 110 from being transferred to adjacent battery cells 110.

To prevent movement of heat, flame or high-temperature particles, the first heat insulation unit 600 may be formed by processing a silicone material having high insulation performance and electrical insulation into a pad or sheet shape, and may be disposed between the battery cells 111.

In addition, the first heat insulation unit 600 may be formed to have a predetermined elasticity. Through this, when the volume of the battery cell 110 is expanded or cooled to be contracted due to heat or a swelling phenomenon, the first heat insulation unit 600 may be effectively expanded or contracted in response thereto.

The first heat insulation unit 600 may be disposed to entirely cover one lateral surface of the battery cell 110. However, it is preferred that the first heat insulation unit 600 is disposed not to exceed a front end or a rear end of the battery cell 110. If the first heat insulation unit 600 is disposed to exceed the front end and the rear end of the battery cell 110, it could be difficult to secure the space for connecting the plurality of electrode leads 111 to the bus bar plate 500.

Accordingly, a single open space may be formed between the front end of the battery cell 110 and between the rear end thereof and the bus bar plate 500. Such an open space may serve as a cooling channel through which air flows.

The first heat insulation unit 600 may be disposed between each two of all the battery cells 111 or intermittently disposed between a predetermined number of battery cells.

In the embodiment shown in FIG. 3, the total of five first heat insulation units 600 may be intermittently provided. However, the present disclosure is not limited thereto. As shown in the drawing, description will be made based on the embodiment in which a total of five first heat insulation units 600 are intermittently disposed.

Since the open spaces formed between the front end of the battery cell 110 and the rear end thereof and the bus bar plate 500 may not be blocked or shut off, heat, flame and high-temperature particles might be diffused through the open spaces.

As means for preventing the heat, flame and high-temperature particles from being diffused through the open space, the battery module 1 according to an embodiment may further include a plurality of second heat insulation units 700 disposed between adjacent electrode leads 111.

The second heat insulation unit 700 formed in a pad or sheet shape may be disposed between the electrode leads, similar to the first heat insulation unit 600. However, the second heat insulation unit 700 may be made of a material having a thermal expansion greater than that of the first heat insulation unit 600.

The second heat insulation unit 700 may be made of a thermally expandable material whose volume expands when a predetermined critical temperature is reached, for example, an expanding paper.

The expanding paper is a material characterized of having a volume that increases when a critical temperature of about 100 to 200 is reached.

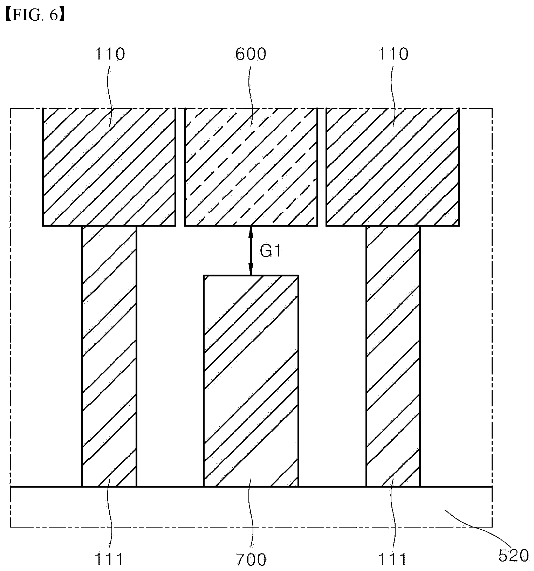

Accordingly, when the battery cell 110 is operating in a normal operation temperature range, the volume of the second heat insulation unit made of the expanding paper may be maintained in an initial state (i.e., an unexpanded state). However, when the ambient temperature of the battery cell 110 reaches a critical temperature due to overheating of the battery cell 110, the expanding paper will expand enough to close the open space formed between the battery cell 110 and the bus bar plate 500 as described, referring to FIG. 6.

When the opening space is closed, a path (P) through which heat, flame and high-temperature particles move to an adjacent battery cell 110 to the open space may be effectively blocked.

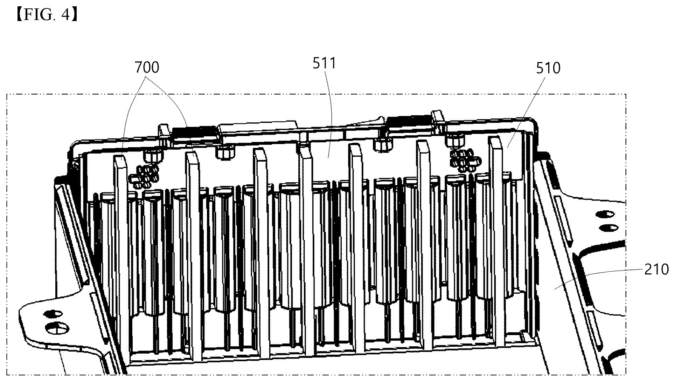

Meanwhile, as shown in FIGS. 3 and 4, one end of the second heat insulation unit 700 may be fixed to the bus bar plate 500.

In other words, the plurality of second heat insulation units 700 provided in the form of pads may be fixed to a rear surface 511 of a first bus bar plate 510 disposed on the front side or a front surface of a second bus bar plate 520 disposed in the rear side, respectively.

Through this, the space required for assembling between the first bar plate 510, the second bus bar plate 520 and the electrode leads 111 which are coupled to each other may be prevented from being reduced by the second heat insulation unit 700.

To maximize the effect of blocking the heat, flame and high-temperature particles, the second heat insulation unit 700 may be arranged parallel to the first heat insulation unit 600, spaced a preset distance apart from the first heat insulation unit 600.

As shown in the drawing, the second heat insulation unit 700 may be intermittently disposed between the electrode leads 111, similar to the first heat insulation unit 600. The second heat insulation unit 700 may be aligned on an extension line of the first heat insulation unit 600 in a front-rear direction (i.e., F-R direction).

Accordingly, when the second heat insulation unit is expanded, the open space may be effectively closed by direct contact of the second heat insulation unit with the front end and the rear end of the first heat insulation unit 600, which will be described later.

Before the expansion starts, the second heat insulation unit 700 may be in a state of being separated from the electrode leads 111. When the expansion starts right after the ambient temperature reaches a predetermined critical temperature, both lateral surfaces of the second heat insulation unit 700 may contact the electrode leads 111.

Through this, the open space formed between the electrode leads and between the battery cell 110 and the bus bar plate 500 may be closed by the second heat insulation units 700 of which at least some are expanded.

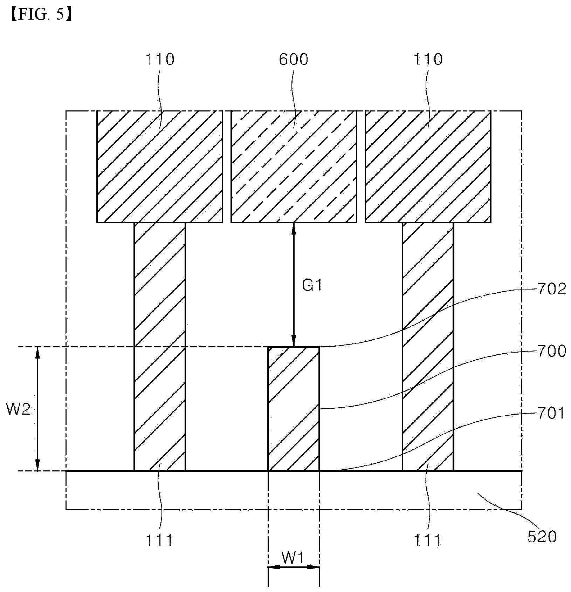

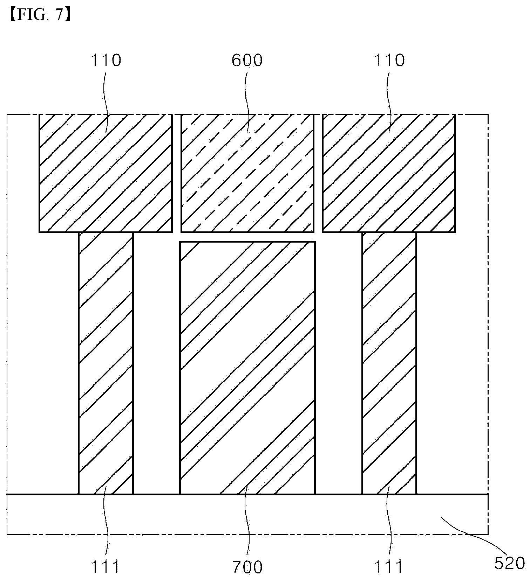

Hereinafter, referring to FIGS. 5 to 7, the process in which the second heat insulation unit 700 closes the open space formed between the electrode leads 111 and between the battery cell 110 and the bus bar plate 500 will be described based on the second heat insulation unit 700 of which a first end 701 is fixed to the second bus bar plate 520.

As shown in FIG. 5, during the operation in a range of normal temperatures, a second end 702 of the second heat insulation unit 700 may keep a state of being separated from the first heat insulation unit 600 with respect to the front-rear direction (i.e., F-R direction).

At this time, the front-rear direction gap G1 between the second end 702 of the second heat insulation unit 700 and the first heat insulation unit 600 may be equal to or smaller than the front-rear direction width S2 of the second heat insulation unit 700. Accordingly, the function of the open space between the battery cells 110 and the second bus bar plate as the cooling channel may be maintained at a proper level.

Alternatively, during the operation in a range of normal temperatures, the left-right direction width W1 of the second heat insulation unit 700 may be formed smaller than a distance between a pair of adjacent electrode leads 111. Accordingly, interference of the second heat insulation unit 700 with respect to the electrode leads may be minimized.

Meanwhile, as shown in FIG. 6, when the ambient temperature of the second heat insulation unit 700 rises to a predetermined temperature, the expansion of the second heat insulation unit 700 may start.

At this time, the expansion may proceed simultaneously in the front-rear direction (i.e., F-R direction) and the left-right direction (i.e., Le-Ri direction).

Accordingly, the second end 702 of the second heat insulation unit 700 may gradually move toward the first heat insulation unit 600. The front-rear direction gap G1 between the other end of the second heat insulation unit 700 and the first heat insulation unit 600 may gradually decrease.

Both lateral surfaces of the second heat insulation unit 700 may move toward the pair of electrode lead 111 facing them, and a gap between the pair of electrode leads may gradually decrease.

When such the expansion of the second heat insulation unit 700 continuously proceeds, the second end 702 of the second heat insulation unit 700 may be expanded to the first heat insulation unit 600 and both the lateral surfaces of the second heat insulation unit 700 may be expanded to the pair of electrode leads 111.

Once the expansion of the second heat insulation unit 700 is completed, the open space formed between the battery cells 110 and the bus bar plate 500 and between the pair of electrode leads 111 may be entirely closed by the second heat insulation unit 700 so that the path P through which heat, flame and high-temperature particles flow may be blocked.

Although the present invention has been described with reference to the exemplified drawings, it is to be understood that the present invention is not limited to the embodiments and drawings disclosed in this specification, and those skilled in the art will appreciate that various modifications are possible without departing from the scope of the present invention. Further, although the operating effects according to the configuration of the present invention are not explicitly described while describing an embodiment of the present invention, it should be appreciated that predictable effects are also to be recognized by the configuration.

## Claims

1. A battery module (1) comprising:
a stacked battery cell body (100) having a first battery cell and a second battery celladjacent to each other;
a plurality of electrode leads (111) electrically connected to the first battery cell and the second battery cell, respectively;
a first heat insulator (600) disposed between the first battery cell and the second battery cell; and
a second heat insulator (700) disposed between the plurality of electrode leads (111),
wherein the second heat insulator (700) is made of a material having a higher coefficient of thermal expansion than that of the first heat insulator (600);
wherein the second heat insulator (700) is made of a thermally expandable material configured to increase in volume when a predetermined critical temperature is reached;
the battery module (1) further comprising a bus bar plate (500) configured to electrically connect the plurality of electrode leads (111) to each other;
wherein the second heat insulator (700) has a plate shape with a first side end (701) fixed to the bus bar plate (500);
wherein the second heat insulator (700) is configured to be separated from the first heat insulator (600) prior to expansion of the second heat insulator (700);
wherein a second side end (702) of the second heat insulator (700) is configured to come into contact with the first heat insulator (600) after the expansion of the second heat insulator (700) starts after the predetermined critical temperature is reached.

2. The battery module of claim 1, wherein the thermally expandable material comprises an expanding paper.

3. The battery module of claim 1 or 2, wherein the first heat insulator (600) is made of a silicone-based material.

4. The battery module of one of claims 1 to 3, wherein the second heat insulator (700) is configured to be separated from each of the plurality of electrode leads (111) before the expansion of the second heat insulator starts (700).

5. The battery module of claim 4, wherein, when the expansion of the second heat insulator (700) starts after the predetermined critical temperature is reached, lateral surfaces of the second heat insulator (700) are configured to come into contact with the plurality of electrode leads (111), respectively.

6. The battery module of claim 1, wherein, once the expansion of the second heat insulator (700) is completed, a space between the plurality of electric leads (111) is closed.

## Patentansprüche

1. Batteriemodul (1), umfassend:
einen gestapelten Batteriezellenkörper (100), welcher eine erste Batteriezelle und eine zweite Batteriezelle aufweist, welche benachbart zueinander sind;
eine Mehrzahl von Elektrodenleitungen (111), welche jeweils elektrisch mit der ersten Batteriezelle und der zweiten Batteriezelle verbunden sind;
einen ersten Wärmeisolator (600), welcher zwischen der ersten Batteriezelle und der zweiten Batteriezelle angeordnet ist; und
einen zweiten Wärmeisolator (700), welcher zwischen der Mehrzahl von Elektrodenleitungen (111) angeordnet ist,
wobei der zweite Wärmeisolator (700) aus einem material gefertigt ist, welches einen höheren thermischen Expansionskoeffizienten aufweist als derjenige des ersten Wärmeisolators (600);
wobei der zweite Wärmeisolator (700) aus einem thermisch expandierbaren Material gefertigt ist, welches dazu eingerichtet ist, sein Volumen zu vergrößern, wenn eine vorbestimmte, kritische Temperatur erreicht ist;
wobei das Batteriemodul (1) ferner eine Stromschienenplatte (500) umfasst, welche dazu eingerichtet ist, die Mehrzahl von Elektrodenleitungen (111) elektrisch miteinander zu verbinden;
wobei der zweite Wärmeisolator (700) eine Plattenform mit einem ersten Seitenende (701) aufweist, welches an der Stromschienenplatte (500) fixiert ist;
wobei der zweite Wärmeisolator (700) dazu eingerichtet ist, von dem ersten Wärmeisolator (600) vor einer Expansion des zweiten Wärmeisolators (700) getrennt zu sein;
wobei ein zweites Seitenende (702) des zweiten Wärmeisolators (700) dazu eingerichtet ist, mit dem ersten Wärmeisolator (600) in Kontakt zu kommen, nachdem die Expansion des zweiten Wärmeisolators (700) beginnt, nachdem die vorbestimmte, kritische Temperatur erreicht ist.

2. Batteriemodul nach Anspruch 1, wobei das thermisch expandierbare Material ein expandierendes Papier umfasst.

3. Batteriemodul nach Anspruch 1 oder 2, wobei der erste Wärmeisolator (600) aus einem silikonbasierten Material gefertigt ist.

4. Batteriemodul nach einem der Ansprüche 1 bis 3, wobei der zweite Wärmeisolator (700) dazu eingerichtet ist, von jeder von der Mehrzahl von Elektrodenleitungen (111) getrennt zu sein, bevor die Expansion des zweiten Wärmeisolators (700) beginnt.

5. Batteriemodul nach Anspruch 4, wobei, wenn die Expansion des zweiten Wärmeisolators (700) beginnt, nachdem die vorbestimmte, kritische Temperatur erreicht ist, laterale Flächen des zweiten Wärmeisolators (700) dazu eingerichtet sind, jeweils mit der Mehrzahl von Elektrodenleitungen (111) in Kontakt zu kommen.

6. Batteriemodul nach Anspruch 1, wobei, sobald die Expansion des zweiten Wärmeisolators (700) abgeschlossen ist, ein Raum zwischen der Mehrzahl von elektrischen Leitungen (111) geschlossen ist.

## Revendications

1. Module de batterie (1) comprenant :
un corps de cellules de batterie empilées (100) ayant une première cellule de batterie et une seconde cellule de batterie adjacentes l'une à l'autre ;
une pluralité de fils d'électrode (111) connectés électriquement à la première cellule de batterie et à la seconde cellule de batterie, respectivement ;
un premier isolant thermique (600) disposé entre la première cellule de batterie et la seconde cellule de batterie ; et
un second isolant thermique (700) disposé entre la pluralité de fils d'électrode (111),
dans lequel le second isolant thermique (700) est constitué d'un matériau ayant un coefficient de dilatation thermique supérieur à celui du premier isolant thermique (600) ;
dans lequel le second isolant thermique (700) est constitué d'un matériau thermiquement dilatable configuré pour augmenter en volume lorsqu'une température critique prédéterminée est atteinte ;
le module de batterie (1) comprenant en outre une plaque de barre omnibus (500) configurée pour connecter électriquement la pluralité de fils d'électrode (111) entre eux ;
dans lequel le second isolant thermique (700) a une forme de plaque avec une première extrémité latérale (701) fixée à la plaque de barre omnibus (500) ;
dans lequel le second isolant thermique (700) est configuré pour être séparé du premier isolant thermique (600) avant dilatation du second isolant thermique (700) ;
dans lequel une seconde extrémité latérale (702) du second isolant thermique (700) est configurée pour entrer en contact avec le premier isolant thermique (600) après le début de la dilatation du second isolant thermique (700) après que la température critique prédéterminée est atteinte.

2. Module de batterie selon la revendication 1, dans lequel le matériau thermiquement dilatable comprend un papier extensible.

3. Module de batterie selon la revendication 1 ou 2, dans lequel le premier isolant thermique (600) est constitué d'un matériau à base de silicone.

4. Module de batterie selon l'une des revendications 1 à 3, dans lequel le second isolant thermique (700) est configuré pour être séparé de chacun de la pluralité de fils d'électrode (111) avant le début de la dilatation du second isolant thermique (700).

5. Module de batterie selon la revendication 4, dans lequel, lorsque la dilatation du second isolant thermique (700) commence après que la température critique prédéterminée est atteinte, des surfaces latérales du second isolant thermique (700) sont configurées pour entrer en contact avec la pluralité de fils d'électrode (111), respectivement.

6. Module de batterie selon la revendication 1, dans lequel, une fois la dilatation du second isolant thermique (700) terminée, un espace entre la pluralité de fils électriques (111) est obturé.
